Europäisches Patentamt

European Patent Office

Office européen des brevets

(11) Numéro de publication: **0 400 496 B1**

## FASCICULE DE BREVET EUROPEEN

(45) Date de publication de fascicule du brevet: **08.06.94**

(51) Int. Cl.5: **B29C 47/36**, B29C 47/38, B29C 47/50, F04B 15/02

(21) Numéro de dépôt: **90109956.4**

(22) Date de dépôt: **25.05.90**

(54) **Pompe volumétrique et procédé pour pomper volumétriquement.**

(30) Priorité: **01.06.89 FR 8907494**

(43) Date de publication de la demande:
**05.12.90 Bulletin 90/49**

(45) Mention de la délivrance du brevet:
**08.06.94 Bulletin 94/23**

(84) Etats contractants désignés:
**AT BE CH DE DK ES FR GB GR IT LI LU NL SE**

(56) Documents cités:
EP-A- 0 158 814          EP-A- 0 264 600
DE-A- 1 778 125          DE-A- 2 201 404
DE-A- 2 814 285          DE-A- 3 113 737
FR-A- 1 339 308          FR-A- 2 179 126
FR-A- 2 301 377          US-A- 2 944 288
US-A- 3 029 471          US-A- 3 032 819
US-A- 3 706 827          US-A- 4 195 970

(73) Titulaire: **SEDEPRO**
**25, rue de l'Arcade**
**75008 Paris(FR)**

(72) Inventeur: **Laurent, Daniel**
**23, Avenue de la Plaine Fleurie**
**38240 Meylan(FR)**
Inventeur: **Deal, Michael**
**Les Rollats**
**03110 St.-Remy-En-Rollat(FR)**
Inventeur: **Brihaye, Francis**
**Lotissement Le Suc - Pulvérières**
**63230 Pontgibaud(FR)**

(74) Mandataire: **Bauvir, Jacques**
**Michelin & Cie,**
**Service SRK Brevets**
**F-63040 Clermont-Ferrand Cédex (FR)**

EP 0 400 496 B1

## Description

La présente invention se rapporte au pompage volumétrique utilisable notamment avec une matière pâteuse, en particulier du caoutchouc non vulcanisé.

Les procédés d'élaboration de produits en caoutchouc requièrent, à plusieurs stades de leur fabrication, le dosage quantitatif du caoutchouc non vulcanisé.

Par exemple, au moment de l'élaboration des mélanges, on procède usuellement par pesées. Pour l'application des produits en caoutchouc sur une ébauche de pneumatique, la demande de brevet EP 0 264 600 propose de recourir à un ensemble cylindre-piston pour permettre une pose volumétrique grâce au caractère exactement déterminé du volume balayé par le piston agissant comme organe d'extrusion. Malheureusement, le procédé est discontinu puisque, lorsque le cylindre est vide, il est nécessaire de le remplir à nouveau avant d'être capable d'effectuer une nouvelle pose.

L'utilisation d'extrudeuses à vis (ou boudineuses) permet de rendre continu le passage de la matière première aux produits extrudés. Cependant, les extrudeuses à vis ne sont pas volumétriques, en particulier très nettement insuffisamment volumétriques pendant les phases de démarrage et d'arrêt. Les extrudeuses à vis ne peuvent extruder un volume déterminable que pour un régime parfaitement établi : température stabilisée, pas de variation de pertes de charge en sortie d'extrudeuse. En outre, dans le cas des extrudeuses à vis, lorsque l'on passe d'un mélange à un autre mélange ayant des caractéristiques physiques différentes, par exemple un collant différent, le débit extrudé pour une même vitesse de rotation de la vis sera différent. Une condition nécessaire pour qu'une extrudeuse ou une pompe puisse être qualifiée de volumétrique est que le débit extrudé ne dépende que d'un paramètre de commande de ladite extrudeuse ou pompe (par exemple la vitesse de rotation d'un arbre d'entrée) et ne dépende pas de façon significative des caractéristiques physiques de la matière à extruder. On connait aussi le dispositif décrit dans la demande de brevet FR-A-2301377, qui correspond au préambule de la revendication 1.

L'objectif de la présente invention est de proposer un procédé et une pompe volumétriques susceptibles de travailler en continu, qui restent volumétriques en phase de démarrage et d'arrêt, quel que soit le débit extrudé, et qui puissent être utilisés même avec les matériaux difficiles à manipuler parce que pâteux, visco élastiques ou plastiques, comme du caoutchouc non vulcanisé.

L'invention propose un procédé de pompage volumétrique pour matière pâteuse, au moyen d'au moins un piston de refoulement coulissant dans un cylindre entre un point mort haut et un point mort bas, la paroi du cylindre comportant des lumières d'admission situées axialement entre lesdits point mort haut et point mort bas, la paroi occultant ledit cylindre du côté point mort haut comportant une ouverture d'évacuation pourvue d'un dispositif anti-retour, le cycle de pompage consistant à introduire ladite matière dans une chambre d'alimentation aboutissant auxdites lumières pour gaver, par un transfert mécaniquement forcé actionné par la même commande que le ou les pistons de refoulement, ledit cylindre par la matière à pomper lorsque le piston dégage les lumières d'admission, à avancer le piston jusqu'à obturation des lumières d'admission, à ouvrir le dispositif anti-retour pour dégager l'ouverture d'évacuation dès que le piston a complètement obturé les lumières d'admission, à poursuivre l'avance du piston jusqu'au point mort haut, puis à refermer l'ouverture d'évacuation par le dispositif anti-retour, et à ramener le piston vers le point mort bas, puis à reprendre ledit cycle.

Une variante de ce procédé prévoit d'utiliser au moins deux pistons dont les mouvements sont commandés de façon à ce que la somme des débits franchissant lesdites ouvertures d'évacuation soit constante.

Selon l'invention, la pompe volumétrique pour matière pâteuse, ayant une trappe d'admission de la matière et un orifice de sortie, comportant au moins un cylindre dans lequel coulisse un piston de refoulement selon un mouvement alternatif entre un point mort haut et un point mort bas et comportant une ouverture d'évacuation pourvue d'un dispositif anti-retour, ladite pompe comportant une chambre d'alimentation disposée entre ladite trappe d'alimentation et le ou lesdits cylindres, ladite pompe comportant des moyens pour gaver le ou lesdits cylindres par un transfert mécaniquement forcé depuis ladite trappe d'admission vers le ou lesdits cylindres, est caractérisée en ce que la paroi du ou desdits cylindres comporte, pour seules communications avec l'extérieur du cylindre, une ou plusieurs lumières d'admission de la matière auxquelles aboutit la chambre d'alimentation, situées entre ledit point mort point bas et ledit point mort haut, lesdites lumières étant susceptibles d'être occultées par le piston de refoulement pendant son mouvement vers le point mort haut, le volume extrudé par la pompe en un cycle étant fonction de la cylindrée balayée par chaque piston de refoulement entre le moment de sa course où l'orifice d'admission est obturé et le point mort haut de sa course, et en ce que les moyens pour gaver et le ou lesdits pistons de refoulement sont animés par la même commande.

Selon la terminologie classique, on appelle "point mort haut" le point de la course atteint en fin de compression, et "point mort bas" le point opposé de la course du piston.

Une telle pompe délivre à chaque cycle un volume de matière indépendant de la pression de refoulement : elle est donc volumétrique. Cependant, dans sa variante la plus simple, une telle pompe comporte un seul piston et son débit est pulsé : il peut être constant en moyenne, mais il ne peut pas être identique à tous les instants du cycle.

C'est pourquoi l'invention prévoit d'adjoindre à cet ensemble de pompage volumétrique un élément de stabilisation du débit, ou alors l'invention prévoit de réaliser une pompe multi-pistons, mue de telle sorte que le débit instantané puisse être identique au débit moyen.

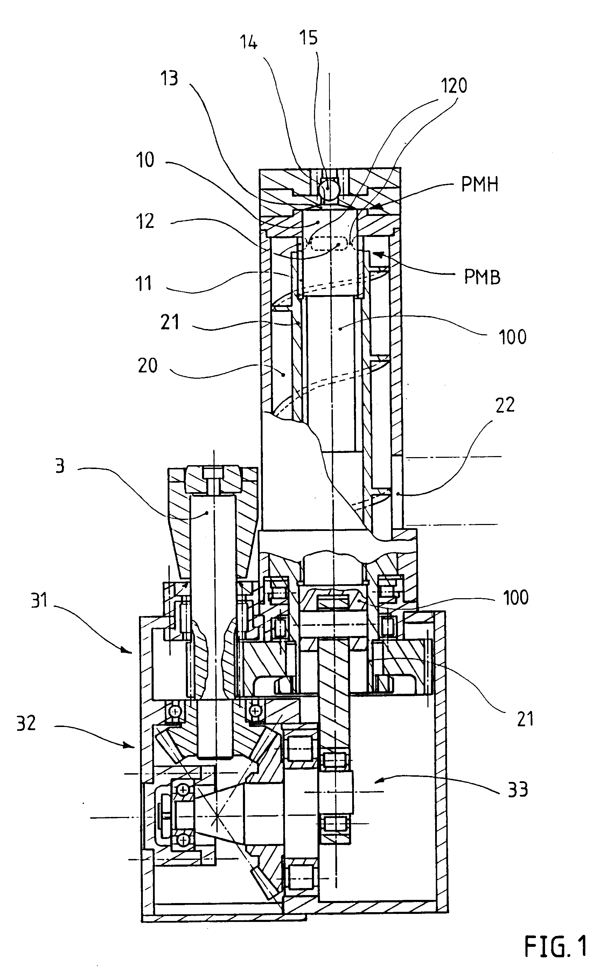

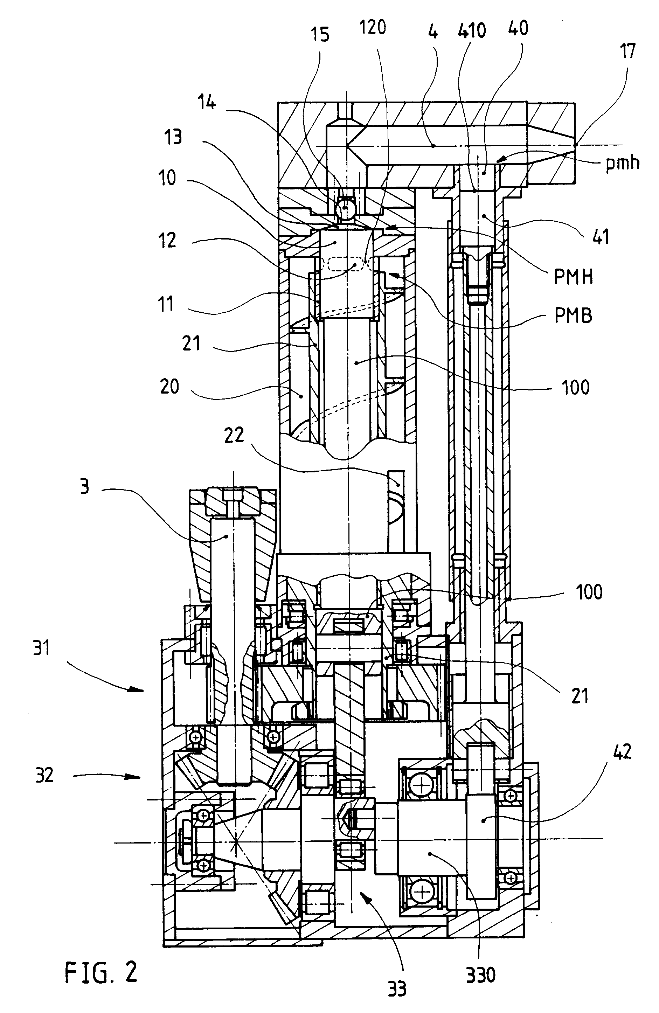

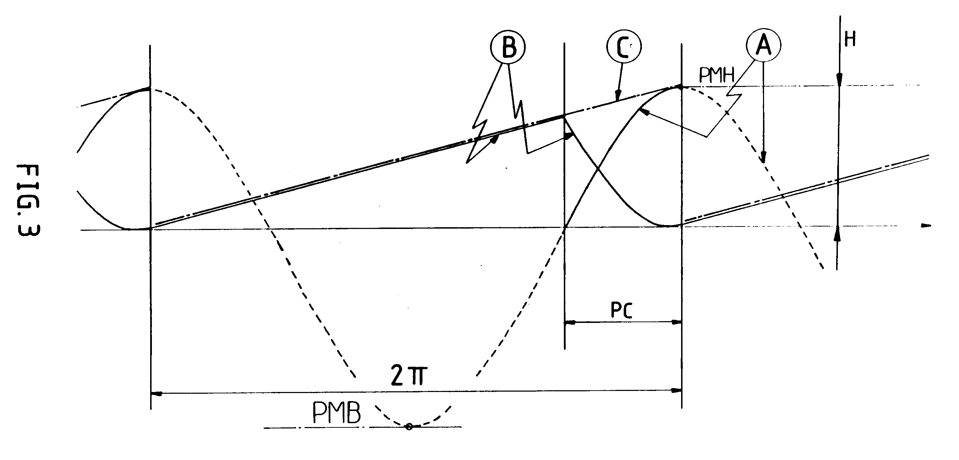

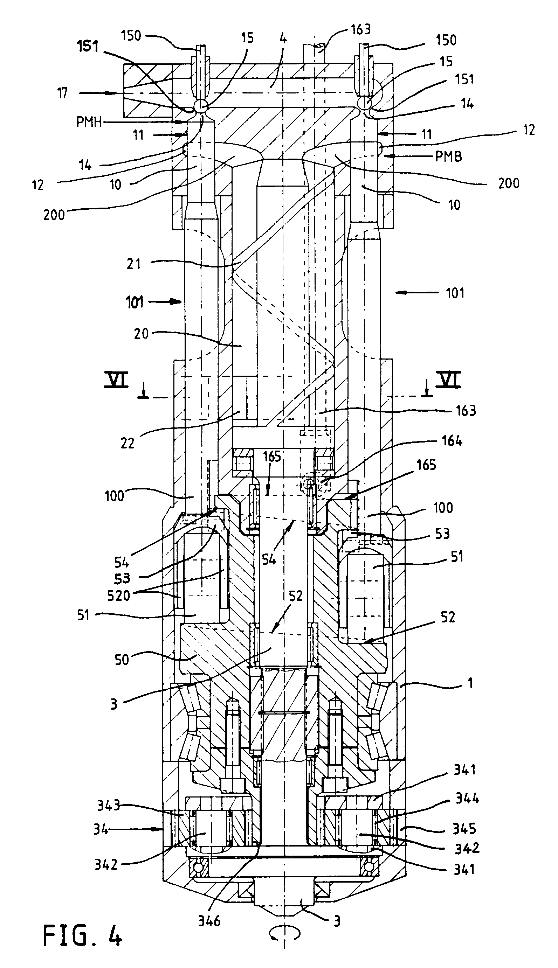

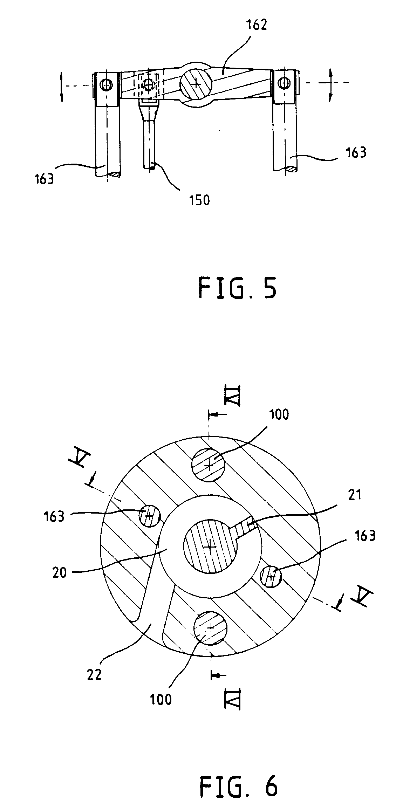

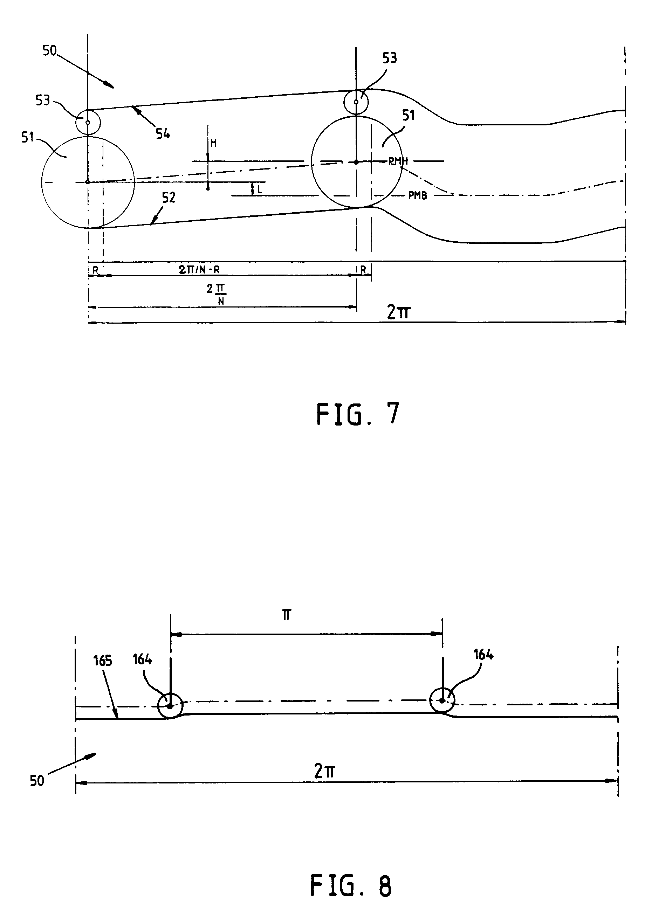

Les figures jointes illustrent différentes variantes de l'invention dans lesquelles la pompe est chaque fois conçue comme un organe individuel, animé par un seul arbre d'entrée, susceptible d'être manipulé par un robot comportant une transmission qui peut être crabotée à l'arbre d'entrée. Cette disposition est bien sûr non limitative. La figure 1 montre une pompe volumétrique et la figure 2, la même pompe comportant un dispositif supplémentaire de compensation des pulsations. La figure 3 explique certains des mouvements de la pompe représentée en figure 2. La figure 4 montre une pompe volumétrique à plusieurs pistons, vue en coupe selon IV IV à la figure 6. La figure 5 est une vue selon V V à la figure 6. La figure 6 est une vue partielle selon VI VI à la figure 4. Les figures 7 et 8 explicitent la commande des mouvements essentiels de la pompe.

Aux figures 1 et 2, on aperçoit un piston de refoulement 10 coulissant dans un cylindre 11. Le piston de refoulement 10 est représenté au point mort haut PMH de sa course. Dans cette position, les quatre lumières 12 aménagées dans la paroi du cylindre 11 sont occultées par le piston de refoulement 10, alors qu'elles ne le sont plus au point mort bas PMB de la course. On voit également une chambre 20 ceinturant partiellement le cylindre 11. Une vis de gavage 21, dont l'axe de rotation est confondu avec l'axe du cylindre 11, est en rotation dans cette chambre 20, et assure un transfert de la matière vers les lumières 12, elle-mêmes disposées à l'extrémité de cette chambre 20.

Grâce au remplissage au travers de lumières 12 disposées dans la paroi latérale du cylindre 11, on parvient à transférer très efficacement une matière quelconque et en particulier du caoutchouc non vulcanisé à l'intérieur du cylindre parce que cette disposition permet une section de passage très grande et un minimum de pertes de charge. La continuité de la paroi du cylindre 11 est maintenue sur quelques secteurs 120 étroits pour assurer le guidage du piston de refoulement 10 dans le cylindre 11. De préférence, la dimension des lumières 12 dans le sens axial (sens du mouvement du piston de refoulement 10) est optimisée pour assurer le caractère volumétrique de la pompe par un gavage complet du cylindre 11 (lumières aussi grandes que possible dans la direction axiale) et pour atteindre un débit maximal à un régime donné (lumières aussi petites que possible dans la direction axiale). Puisque la chambre 20 entoure de toutes parts le cylindre 11, le remplissage de la cylindrée se produit sur tout son pourtour et est de ce fait très rapide.

De l'autre côté de la chambre 20, on a prévu une trappe d'alimentation 22 que l'on aperçoit dans la paroi radialement extérieure de cette chambre 20. Il suffit d'introduire une bande de caoutchouc non vulcanisé dans la trappe d'alimentation 22, puis la rotation de la vis de gavage 21 entraine automatiquement l'appel de caoutchouc nécessaire. On pourrait facilement prévoir d'autres formes d'alimentation en caoutchouc cru, aucune précision volumétrique n'étant requise à cet endroit. Par la disposition concentrique de la vis de gavage 21 par rapport au cylindre 11, on assure une bonne répartition finale de la matière tout autour du cylindre 11 et un encombrement réduit.

La paroi 13 occultant le cylindre 11 du côté du point mort haut PMH comporte une ouverture 14 d'évacuation pourvue d'un dispositif anti-retour. C'est ici une bille 15 dont le recul est limité par une butée. Cette bille 15 libère l'ouverture 14 sous l'effet de la pression conférée au caoutchouc par le piston de refoulement 10, et obture l'ouverture 14 sous l'effet d'une contre pression. Une telle pompe permet de réaliser un dosage parfaitement volumétrique d'un produit pâteux comme du caoutchouc à l'état non vulcanisé.

Il est possible de provoquer le retour de la bille 15 sur son siège grâce à un ressort, pour obturer l'ouverture 14 quelles que soient les conditions de contre pression régnant en aval de l'ouverture 14. Il est également possible de prévoir un dispositif anti-retour, comme un clapet commandé de façon synchronisé aux mouvements du piston de refoulement 10, afin de provoquer une levée rapide aussitôt que les lumières 12 sont masquées par le piston de refoulement 10, et d'obturer l'ouverture 14 dès que le piston a atteint son point mort haut PMH.

La chaîne cinématique comprend l'arbre d'entrée 3, un premier train d'engrenages 31 commandant la rotation de la vis 21, puis un deuxième train d'engrenages 32 commandant, via un système bielle-manivelle 33, le mouvement alternatif de la tige 100 prolongeant le piston de refoulement 10.

Le débit de la pompe décrite jusqu'à présent est pulsé : cela signifie que, pour une vitesse de rotation donnée conférée à l'arbre d'entrée 3, le débit moyen est constant tandis que le débit instantané à l'intérieur d'un cycle du piston de refoulement 10 est variable. Pour les applications dans lesquelles la pulsation est à éviter, il convient d'ajouter une enceinte de volume variable capable de compenser la pulsation, en aval du dispositif anti-retour et en amont de l'orifice de sortie. La variation du volume de l'enceinte doit permettre d'absorber une partie du volume extrudé par le piston de refoulement pendant la partie utile de sa course, et de maintenir un débit au travers de l'orifice de sortie pendant le reste du cycle de la pompe, en restituant le volume absorbé pendant que le dispositif anti-retour obture l'ouverture d'évacuation du cylindre.

C'est le rôle du dispositif supplémentaire décrit avec l'aide de la figure 2. On voit l'enceinte 4 de volume variable disposée entre l'ouverture d'évacuation 14 et l'orifice de sortie 17. Le volume qu'il faut absorber pendant la course du piston 10 entre le point où il obture les lumières 12 et le point mort haut PMH doit correspondre à la cylindrée balayée par le piston de compensation 41. La tête 410 du piston de compensation 41 constitue une partie de la paroi de l'enceinte 4.

A la figure 2, on désigne par 40 la partie variable du volume de l'enceinte 4, c'est-à-dire le volume compris entre la tête 410 du piston de compensation 41 au point considéré de son cycle, et la tête 410 du piston de compensation 41 lorsqu'il est à son point mort haut PMH. Le mouvement du piston de compensation 41 est coordonné à celui du piston de refoulement 10 de façon à rendre constant le débit passant au travers de l'orifice de sortie 17.

Les mouvements sont tous commandés à partir du même arbre d'entrée 3. On voit que le vilebrequin 330 du système bielle-manivelle 33 commandant le piston de refoulement 10, assure également la rotation synchrone d'une came 42 qui commande l'avance du piston de compensation 41, le recul dudit piston de compensation 41 étant assuré par la contre pression régnant dans la chambre 4.

A la figure 3, on a développé les principaux mouvements de la pompe. Les abscisses représentent l'angle de rotation du vilebrequin 330. Les ordonnées représentant la course du piston de refoulement 10, visualisée par la courbe A, et la course du piston de compensation 41, visualisée pour la courbe B.

Le profil de la came est déterminé de telle sorte que, à chaque instant, les volumes engendrés par le déplacement du piston de refoulement 10 et du piston de compensation 41, volumes algébriquement totalisés, assurent un débit constant au travers de l'orifice de sortie 17. Dans ladite totalisation, l'action du piston de refoulement 10 n'est prise en compte (partie en trait plein de la courbe A) que pendant son déplacement utile PC entre l'obturation des lumières 12 et le point mort haut (portion H de la course, dite utile) et doit être considérée comme nulle pendant le reste du cycle. Ledit débit constant est lui-même déterminé très simplement en étalant sur tout le cycle le volume de matière susceptible d'être extrudée par le piston de refoulement 10 tel qu'il fonctionne sans tenir compte du piston de compensation 41. Pendant la phase de compensation PC, la somme des débits dus au piston de refoulement 10 (courbe A) et au piston de compensation 41 (courbe B) est représenté par la courbe C.

Lorsque le mouvement du piston de refoulement 10 est commandé par un système bielle-manivelle, la vitesse linéaire du piston est proche de son maximum au moment où le piston de refoulement 10 obture les lumières 12, moment auquel on libère l'ouverture 14. La compensation impose donc une inversion brutale du mouvement du piston de compensation 41, avec une vitesse de recul maximale précisément juste après cette inversion de mouvement. (Phase PC sur la figure 3).

La pompe ainsi conçue peut être très compacte ; elle se prête très bien à la pose robotisée des produits en caoutchouc sur une ébauche du pneumatique, le terme ébauche désignant le pneumatique en cours de fabrication, à n'importe quel stade avant qu'il ne soit vulcanisé. L'invention permet aussi d'utiliser un procédé de fabrication de pneumatiques dans lequel le caoutchouc non vulcanisé est posé sur l'ébauche par un procédé de pompage tel que décrit ci-dessus.

Pour éviter de devoir réaliser une compensation brutale, on peut commander aussi bien le mouvement du piston de refoulement que celui du piston de compensation par des cames dont le profil est judicieusement dessiné. Lorsque la rhéologie du mélange le permet, on peut également alimenter plusieurs pistons avec une seule vis de gavage 21. Cela permet d'augmenter le débit dont la pompe est capable, toutes autres choses égales par ailleurs, et cela minimise l'interruption du flux de caoutchouc dans la chambre 20, interruption qui pourrait conduire à un échauffement élevé du caoutchouc si la vis de gavage continue toujours sa rotation.

Donc, lorsque l'application envisagée ne permet pas d'adopter une commande par système bielle-manivelle, il est proposé une pompe volumétrique ayant une trappe d'admission de la matière et un orifice de sortie, animée en totalité par un seul arbre d'entrée, comportant au moins un piston de refoulement coulissant dans un cylindre selon un mouvement alternatif entre un point mort haut et un point mort bas, la paroi du cylindre comportant une ouverture d'admission de la matière, susceptible d'être occultée pendant le refoulement, et une ouverture d'évacuation pourvue d'un dispositif anti-retour, ladite pompe comportant des moyens pour gaver ledit cylindre au travers de l'ouverture d'admission, le volume extrudé par la pompe en un cycle étant fonction de la cylindrée balayée par chaque piston de refoulement entre le moment de sa course où l'ouverture d'admission est obturée et le point mort haut de sa course, le mouvement de chaque piston étant commandé par un système à came dont le ou les chemins sont tracés de telle sorte que le débit de matière passant au travers de l'orifice de sortie soit constant pour une vitesse constante de l'arbre d'entrée.

A la figure 4, on a représenté une variante de réalisation de la pompe comportant deux pistons de refoulement 10 dont le mouvement est commandé par une seule et même came 50. Dans le présent mémoire, on appelle "came" en toute généralité un élément mécanique permettant de produire un mouvement rectiligne périodique, ou angulaire périodique, à l'aide d'un mouvement circulaire selon une loi choisie.

L'arbre d'entrée 3 est en prise directe avec une vis de gavage 21 disposée à l'intérieur d'une chambre 20 percée d'une trappe d'alimentation 22. La vis de gavage 21 assure un transfert de la matière vers l'extrémité 200 de la chambre 20, d'où elle passe dans les cylindres 11 par les lumières 12. Ces lumières 12 sont aménagées sur tout le pourtour du cylindre 11 pour favoriser un bon remplissage.

Le gavage de chaque cylindre 11 s'effectue piston 10 reculé, comme expliqué ci-avant. Le volume précis à extruder est déterminé par la cylindrée du cylindre 11 au moment précis où le piston 10 obture la lumière 12 de remplissage. Du côté point mort haut PMH, on a disposé sur l'ouverture 14 du cylindre 11 un dispositif anti-retour constitué ici par une bille 15 dont les mouvements seront expliqués plus loin.

Le mouvement des deux pistons 11 de refoulement est coordonné de façon à rendre constant le débit passant au travers de l'orifice de sortie 17 situé en aval de l'enceinte 4 recevant la matière délivrée par chaque cylindre 11.

Le mouvement de tous les pistons est commandé par une came 50. Cette came 50 est du type cylindrique, à double effet. La came 50 est entraînée en rotation à une vitesse quatre fois supérieure à la vitesse de rotation de l'arbre d'entrée 3 par un train épicycloïdal 34. L'arbre d'entrée 3 est solidaire du porte-satellites 341 sur lequel apparaissent deux manetons 342. Les satellites 343 sont montés sur lesdits manetons 342 sur roulements à aiguilles 344. La denture des satellites 343 est en prise avec la couronne extérieure 345 et avec la couronne intérieure 346. La couronne intérieure 346 est fixée à la came 50. La came 50 est en appui via des roulements autour de l'arbre 3 et à l'intérieur du corps 1 de la pompe.

Le mouvement de translation des pistons 10 est parallèle à l'axe de rotation de la came 50. Le mouvement de chaque piston 10 de refoulement du point mort bas PMB vers le point mort haut PMH est commandé par un premier galet 51 en prise avec un premier chemin de roulement 52 usiné sur la came 50. Ce premier galet 51 est tenu par un enfourchement, par deux flasques 520, disposés de part et d'autre du galet 51. En outre, ce premier galet 51 est disposé dans l'axe du piston 10 qu'il commande. L'enfourchement évite que le galet 51 ne soit monté en porte à faux. De la sorte, le piston 10, et surtout la tige 100 qui le prolonge vers l'arrière et le relie au galet 51 ne sont pas sollicités en flexion, ce qui est très important compte tenu des efforts élevés provoqués par la pression de refoulement qui peut être considérable.

Le mouvement de retour du point mort haut PMH vers le point mort bas PMB se fait à contrainte faible. Il est commandé par un second galet 53 beaucoup plus petit que le premier. Ce galet 53 est monté sur la tige 100 en porte à faux par rapport au piston 10, et est en prise avec un second chemin de roulement 54 de la came 50. Aux figures 7 et 8, on a représenté la came 50 développée, pour bien faire apparaître son principe de conception. Les abscisses représentent donc des angles. Un tour complet correspond à une rotation de $2\pi$ radians. "N" représente le nombre de pistons de refoulement 10. Il y a nécessairement N galets ou ensembles de galets 51 et 53 assurant la commande de chacun d'un piston de refoulement 10, tous séparés d'un arc de $\frac{2\pi}{N}$ radians. En ordonnées, on a représenté le déplacement z dans le sens de l'axe de chaque piston de refoulement 10. La hauteur H représente la course utile de chaque piston, c'est-à-dire celle comprise entre l'obturation de la lumière 12 et le point mort haut PMH.

Le chemin de roulement 52 présente une pente constante sur un arc de $\frac{2\pi}{N}$ - R, où R est un angle de recouvrement entre deux pistons, correspondant au temps pendant lequel on ralentit le piston de refoulement arrivant à son point mort haut, et pendant lequel il est nécessaire d'accélérer le piston de refoulement suivant, pour assurer la constance du débit. En dehors de ces périodes de recouvrement, l'un des pistons de refoulement 10 est animé d'un mouvement d'avance régulière, à vitesse constante pour une action à vitesse de rotation constante sur l'arbre d'entrée 3. Donc, la pente du chemin de roulement 52 correspondant à $\frac{2\pi}{N}$ est constante.

De part et d'autre, le chemin de roulement 52 est dessiné pour permettre, en aval de $\frac{2\pi}{N}$, l'arrêt au point mort haut PMH (le chemin 52 comporte donc une pente nulle en fin de période R aval), et en amont, le démarrage coordonné du piston de refoulement suivant (le chemin de roulement 52 comporte donc une forme correspondante pour que la somme des avances respectives de chacun des galets 51 assurent la constance du débit). Le reste du chemin de roulement 52 est tel que chaque piston puisse passer du point mort haut PMH vers le point mort bas PMB, puis avancer jusqu'à l'obturation de sa lumière 12, avec des raccordements suffisamment progressifs pour assurer un mouvement sans heurt.

Le second galet 53 est en prise avec un chemin 54 conformé de telle sorte qu'il assure une commande à double effet : chacun des galets 51 et 53 de chaque piston est en prise constante avec son chemin de roulement. Il est également possible d'échancrer l'enfourchement tenant le galet 51 pour autoriser celui-ci à entrer en prise par un bord latéral avec un chemin de roulement assurant le retour du piston vers le point mort bas, réalisant ainsi une commande à double effet avec un seul galet.

Chaque tige 100 passe dans des évidements 101 (Fig. 4) aménagés dans le corps 1 de la pompe. Le rôle de ces évidements est de collecter d'éventuelles légères fuites de caoutchouc entre pistons 10 et cylindres 11 correspondants, pour éviter que le caoutchouc puisse s'accumuler à un endroit indésirable, par exemple au niveau de la transmission. Ces fuites sont en tout état de cause parfaitement négligeables quant à l'aspect volumétrique de la pompe dont la précision volumétrique atteint 0,3 %, mais il faut en tenir compte pour l'aspect maintenance de la pompe, qui doit fonctionner plusieurs dizaines de milliers d'heures sans panne.

Le dispositif anti-retour à placer en aval des cylindres est ici constitué par une bille 15 coopérant avec un siège 151 réalisé sur l'ouverture d'évacuation 14 du côté extérieur du cylindre 11. Chaque bille 15 est en contact avec un prolongateur 150. Les deux prolongateurs 150 sont en contact avec le même basculeur 162 (voir figure 5) qui impose que l'une des billes 15 soit contre son siège 151 lorsque l'autre bille libère l'ouverture 14, et vice versa. Le basculeur 162 est lui-même commandé par deux poussoirs 163 sollicités chacun par un galet 164. Les galets 164 sont espacés de 180° et coopérent avec un chemin de roulement 165 usiné sur la came 50, pour autoriser le mouvement d'une bille 15 de façon synchrone par rapport au mouvement du piston de refoulement correspondant. La présence de deux poussoirs 163 est nécessaire pour assurer une commande à double effet avec un seul chemin de roulement 165, bien visible à la figure 4. La figure 8 est en phase avec la figure 7 qui est tracée en réalité pour le cas particulier où N = 2.

Si nécessaire, il est possible d'adjoindre à la pompe de l'invention un dispositif de refroidissement, à l'air, à l'eau ou à l'huile, en fonction du dégagement de calories compte tenu du rendement résultant du travail de la vis de gavage. Cette vis peut également jouer un rôle de mélangeage.

Il est bien certain que la description donnée est purement illustrative et ne limite pas la portée de la présente invention, de nombreuses variantes pouvant facilement être envisagées par l'homme du métier pour toutes les caractéristiques non essentielles de l'invention.

Dans l'application à la fabrication des pneumatiques, on peut prévoir une pompe de ce genre par type de mélange de caoutchouc devant constituer le pneumatique. Chaque pompe est manipulée par un robot assurant la présentation judicieuse de l'orifice de sortie 17 à l'ébauche de pneumatique en cours de fabrication, tout en entrainant en rotation l'arbre d'entrée 3 selon le volume à extruder. Le robot manipulateur peut être unique, et s'accoupler successivement à différentes pompes selon le programme requis pour la fabrication. Il est également possible de loger plusieurs robots manipulateurs autour d'une ébauche pour la pose simultanée de produits en caoutchouc différents. Un ensemble de pompes volumétriques de ce genre, avec un ou plusieurs robots manipulateurs, peuvent constituer les extrudeuses volumétriques d'une machine de pose des produits en caoutchouc telle que celle qui apparaît dans la demande de brevet EP 0264 600. Il est également possible de préparer des semi-finis comme des bandes de roulement ou d'autres produits comme des flaps.

## Revendications

1. Pompe volumétrique pour matière pâteuse, ayant une trappe d'admission (22) de la matière et un orifice de sortie, comportant au moins un cylindre (11) dans lequel coulisse un piston de refoulement (10) selon un mouvement alternatif entre un point mort haut et un point mort bas, et comportant une ouverture d'évacuation (14) pourvue d'un dispositif anti-retour, ladite pompe comportant une chambre d'alimentation (20) disposée entre ladite trappe (22) d'alimentation et le ou lesdits cylindres (11), ladite pompe comportant des moyens pour gaver le ou lesdits cylindres par un transfert mécaniquement forcé depuis ladite trappe (22) d'admission vers le ou lesdits cylindres (11), caractérisée en ce que la paroi du ou desdits cylindres (11) comporte, pour seules communications avec l'extérieur du cylindre, une ou plusieurs lumières (12) d'admission de la matière auxquelles aboutit la chambre d'alimentation (20), situées entre ledit point mort bas et ledit point mort haut, lesdites lumières (12) étant susceptibles d'être occultées par le piston de refoulement (10) pendant son mouvement vers le point mort haut, le volume extrudé par la pompe en un cycle étant fonction de la cylindrée balayée par chaque piston de refoulement entre le moment de sa course où l'orifice d'admission est obturé et le point mort haut de sa course, et en ce que les moyens pour gaver et le ou lesdits pistons de refoulement sont animés par la même commande.

2. Pompe selon la revendication 1, caractérisée en ce que les moyens pour gaver sont constitués par une vis de gavage (21) en rotation dans une chambre (20), ladite vis s'étendant entre lesdites lumières et une trappe d'alimentation située dans la paroi extérieure de ladite chambre (20).

3. Pompe selon la revendication 2, caractérisée en ce que ladite chambre (20) est disposée au moins partiellement autour du cylindre (11) au niveau des lumières (12), l'axe de rotation de la vis (21) étant confondu avec l'axe dudit cylindre (10).

4. Pompe selon l'une des revendications 1 à 3, caractérisée en ce qu'elle comporte, en aval de l'ouverture d'évacuation (14), et en amont d'un orifice de sortie (17), une enceinte (4) de volume variable.

5. Pompe selon la revendication 4, caractérisée en ce qu'elle comporte un piston de compensation (41) dont la tête (410) constitue une partie de la paroi de l'enceinte (4), et en ce que la partie variable du volume de l'enceinte (4) est le volume compris entre la tête (410) du piston de compensation (41) à un point quelconque du cycle et la tête (410) du piston de compensation (41) à son point mort haut (PMH).

6. Pompe selon la revendication 5, caractérisée en ce que le mouvement du piston de compensation (41) est commandé par une came (42) en rotation synchrone avec le mouvement du piston de refoulement (10).

7. Pompe volumétrique selon la revendication 1 ou 2, caractérisée en ce qu'elle comporte au moins deux pistons de refoulement (10) coulissant chacun dans un dit cylindre (11), lesdits moyens de gavage étant susceptibles de gaver tous lesdits cylindres (11), chacune des ouvertures d'évacuation (14) pourvues d'un dispositif anti-retour aboutissant à un collecteur pourvu d'un orifice de sortie (17), et en ce que le mouvement de tous les pistons de refoulement (10) est coordonné de façon à rendre constant le débit passant au travers de l'orifice de sortie (17).

8. Pompe selon la revendication 7, caractérisée en ce que le mouvement de tous les pistons est commandé par une came dont le ou les chemins sont tracés de telle sorte que le débit de matière passant au travers de l'orifice de sortie soit constant pour une vitesse constante de l'arbre d'entrée.

9. Pompe selon la revendication 7, caractérisée en ce que le mouvement de tous les pistons est commandé par une seule came cylindrique à double effet (50), dont l'axe de rotation est parallèle à l'axe desdits pistons, et dont le ou les chemins sont tracés de telle sorte que le débit de matière passant au travers de l'orifice de sortie soit constant pour une vitesse constante de l'arbre d'entrée.

10. Pompe selon la revendication 9, caractérisée en ce que le mouvement de chaque piston de refoulement (10) depuis le point mort bas (PMB) vers le point mort haut (PMH) est commandé par un premier galet (51) en prise avec un premier chemin de roulement (52) de la came (50), ledit premier galet (51) étant tenu de chaque côté par deux flasques (520) et étant disposé dans l'axe dudit piston (10), et en ce que le mouvement de retour du point mort haut (PMH) vers le point mort bas (PMB) est commandé par un second galet (53) en prise sur un second chemin de roulement (54) de la came (50), ledit second galet (53) étant monté en porte à faux par rapport à chaque piston (10).

11. Pompe selon l'une des revendications 1 à 10, caractérisée en ce que le dispositif anti-retour est constitué par une bille (15) coopérant avec un siège (151) réalisé sur l'ouverture d'évacuation (14) du côté extérieur du cylindre (11).

12. Pompe selon la revendication 11, caractérisée en ce que le mouvement de ladite bille (15) est commandé de façon synchrone par rapport au mouvement du (des) piston(s) de refoulement (11).

13. Procédé de pompage volumétrique pour matière pâteuse, au moyen d'au moins un piston de refoulement coulissant dans un cylindre entre un point mort haut et un point mort bas, la paroi du cylindre comportant des lumières d'admission situées axialement entre lesdits point mort haut et point mort bas, la paroi occultant ledit cylindre du côté point mort haut comportant une ouverture d'évacuation pourvue d'un dispositif anti-retour, le cycle de pompage consistant à introduire ladite matière dans une chambre d'alimentation aboutissant auxdites lumières pour gaver, par un transfert mécaniquement forcé actionné par la même commande que le ou les pistons de refoulement, ledit cylindre par la matière à pomper lorsque le piston dégage les lumières d'admission, à avancer le piston jusqu'à obturation des lumières d'admission, à ouvrir le dispositif anti-retour pour dégager l'ouverture d'évacuation dès que le piston a complètement obturé les lumières d'admission, à poursuivre l'avance du piston jusqu'au point mort haut, puis à refermer l'ouverture d'évacuation par le dispositif anti-retour, et à ramener le piston vers le point mort bas, puis à reprendre ledit cycle.

14. Procédé selon la revendication 13, caractérisé en ce que l'on utilise au moins deux pistons dont les mouvements sont commandés de façon à ce que la somme des débits franchissant lesdites ouvertures d'évacuation soit constante.

15. Procédé de fabrication de pneumatiques dans lequel le caoutchouc non vulcanisé est posé sur l'ébauche par un procédé de pompage selon l'une des revendications 13 ou 14.

## Claims

1. A volumetric pump for a paste material, having a feed trap (22) for the material and an outlet orifice, comprising at least one delivery piston (10) sliding in a cylinder (11) in accordance with a reciprocating movement between a top dead center and a bottom dead center, and conprising an evacuation opening (14) provided with a non-return device, said pump comprising a feed chamber (20) arranged between said trap (22) and said cylinder or cylinders (11), said pump comprising force feeding means to feed said cylinder or cylinders (11) from said trap (22), characterized by the fact that the wall of the cylinder or cylinders (11) comprises, as sole communication with the exterior of the cylinder, one or several inlet ports (12) to which the chamber (20) ends, located axially between said top dead center and bottom dead center, said inlet port or ports (12) being closed by the delivery piston (10) during its movement towards the top dead center, the volume extruded in one cycle of the pump being a function of the volume swept over by each delivery piston between the point where it closes the port or ports and the top dead center, and by the fact that the feeding means and the delivery piston or pistons are driven by a single input shaft.

2. A pump according to Claim 1, characterized by the fact that the feeding means consist of a feeding screw (21) rotating within a chamber (20), said screw extending between the said ports and a feed trap located in the outer wall of the said chamber (20).

3. A pump according to Claim 2, characterized by the fact that the said chamber (20) is arranged at least partially around the cylinder (11) at the level of the ports (12), the axis of rotation of the screw (21) being identical with the axis of the said cylinder (10).

4. A pump according to any of Claims 1 to 3, characterized by the fact that it comprises an enclosure (4) of variable volume downstream of the evacuation opening (14) and upstream of an outlet orifice (17).

5. A pump according to Claim 4, characterized by the fact that it comprises a compensation piston (41) the head (410) of which constitutes a part of the wall of the enclosure (4) and by the fact that the variable portion of the volume of the enclosure (4) is the volume contained between the head (410) of the compensation piston (41) at any point of the cycle and the head (410) of the compensation piston (41) at its top dead center (PMH).

6. A pump according to Claim 5, characterized by the fact that the movement of the compensation piston (41) is controlled by a cam (42) in synchronous rotation with the movement of the delivery piston (10).

7. A volumetric pump according to Claim 1 or 2, characterized by the fact that it comprises at least two delivery pistons (10) each sliding in a said cylinder (11), the said feeding means being capable of feeding all said cylinders (11), each of the evacuation openings (14), which are provided with an anti-return device, leading to a collector provided with an outlet orifice (17), and by the fact that the movement of all the delivery pistons (10) is coordinated so as to make the discharge passing through the outlet orifice (17) constant.

**8.** A pump according to Claim 7, characterized by the fact that the movement of all the pistons is controlled by a cam whose profile or profiles are determined in such a manner that the flow of material discharged through the outlet orifice is constant for a constant speed of the input shaft.

**9.** A pump according to Claim 7, characterized by the fact that the movement of all the pistons is controlled by a single doubleacting cylindrical cam (50) the axis of rotation of which is parallel to the axis of the said pistons, and whose profile or profiles are determined in such a manner that the flow of material discharged through the outlet orifice is constant for a constant speed of the input shaft.

**10.** A pump according to Claim 9, characterized by the fact that the movement of each delivery piston (10) from the bottom dead center (PMB) to the top dead center (PMH) is controlled by a primary roller (51) in engagement with a first travel path (52) of the cam (50), the said primary roller (51) being held on each side by two side walls (520) and being arranged in the axis of the said piston (10), and by the fact that the return movement from the top dead center (PMH) to the bottom dead center (PMB) is controlled by a secondary roller (53) in engagement on a second travel path (54) of the cam (50), the said secondary roller (53) being mounted overhung with respect to each piston (10).

**11.** A pump according to any of Claims 1 to 10, characterized by the fact that the anti-return device consists of a ball (15) cooperating with a seat (151) produced on the evacuation opening (14) on the outer side of the cylinder (11).

**12.** A pump according to Claim 11, characterized by the fact that the movement of said ball (15) is controlled synchronously with respect to the movement of the delivery piston or pistons (11).

**13.** A method of volumetric pumping for a paste material, by means of at least one delivery piston sliding in a cylinder between a top dead center and a bottom dead center, the wall of the cylinder having admission ports located axially between said top dead center and bottom dead center, the wall which closes said cylinder on the side of the top dead center having an evacuation opening provided with a non-return device, the pumping cycle consisting of feeding with said material a feeding chamber ending to said admission ports in order to feed, with force feeding means driven by the same input shaft than the delivery piston or pistons, said cylinder with the material to be pumped when the piston releases the admission ports, advancing the piston until the closing of the admission ports, opening the anti-return device to free the evacuation opening as soon as the piston has completely closed the admission ports, continuing the advance of the piston up to the top dead center, then again closing the evacuation opening by the anti-return device and returning the piston to the bottom dead center and then repeating said cycle.

**14.** A method according to Claim 13, characterized by the use of at least two pistons the movements of which are so controlled that the sum of the discharges passing through the said evacuation openings is constant.

**15.** A method of manufacturing tires in which the unvulcanized rubber is placed on the blank by a pumping method according to one of Claims 13 and 14.

**Patentansprüche**

**1.** Zumeßpumpe für pastöses Material, die eine Einlaßklappe (22) des Materials und eine Austrittsöffnung aufweist, mit wenigstens einem Zylinder (11), in dem ein Rückstoßkolben (10) gemäß einer hin- und hergehenden Bewegung zwischen einem oberen Totpunkt und einem unteren Totpunkt gleitet, und mit einer Ausbringöffnung (14), die mit einer Einwegvorrichtung oder Rückschlagvorrichtung versehen ist, wobei die Pumpe eine Zuführkammer (20) aufweist, die zwischen der Einlaßklappe (22) und dem oder den Zylindern (11) angeordnet ist, wobei die Pumpe Einrichtungen zum Stopfen des oder der Zylinder durch einen mechanischen Zwangstransfer ausgehend von der Einlaßklappe (22) zu dem oder den Zylindern (11) aufweist, dadurch gekennzeichnet, daß die Seitenwand des oder der Zylinder (11), nur für die Kommunikation mit dem Äußeren des Zylinders, eine oder mehrere Eintrittsöffnungen (12) des Materials aufweist, an denen die Zuführkammer (20) endet, die zwischen dem unteren Totpunkt und dem oberen Totpunkt angeordnet sind, wobei die Öffnungen (12) in der Lage sind, von dem Rückstoßkolben (10) während seiner Bewegung zum oberen Totpunkt überdeckt zu werden, wobei das durch die Pumpe in einem Zyklus extrudierte Volumen abhängig ist von der von einem jeden Rückstoßkolben überstrichenen Baugröße zwischen dem Moment seines Weges, wo die Eintrittsöffnung überdeckt wird und dem oberen Totpunkt seines Weges, und daß die Einrichtungen zum Stopfen und der oder die Rückstoßkolben von derselben Steuerung bewegt werden.

2. Pumpe nach Anspruch 1, dadurch gekennzeichnet, daß die Stopfeinrichtungen aus einer Stopf- oder Füllschraube (21) in Drehung in einer Kammer (20) gebildet werden, wobei die Schraube sich zwischen den Öffnungen und einer Einlaßklappe erstreckt, die in der äußeren Seitenwand der Kammer (20) angeordnet ist.

3. Pumpe nach Anspruch 2, dadurch gekennzeichnet, daß die Kammer (20) wenigstens teilweise um den Zylinder (11) auf der Höhe der Öffnungen (12) angeordnet ist, wobei die Drehachse der Schraube (21) mit der Achse des Zylinders (10) zusammenfällt.

4. Pumpe nach einem der Ansprüche 1 bis 3, dadurch gekennzeichnet, daß sie stromab der Ausbringöffnung (14) und stromauf einer Austrittsöffnung (17) eine Umhüllung (4) von veränderlichem Volumen aufweist.

5. Pumpe nach Anspruch 4, dadurch gekennzeichnet, daß sie einen Kompensationskolben (41) aufweist, dessen Kopf (410) einen Teil der Seitenwand der Umhüllung (4) bildet, und daß der veränderliche Bereich des Volumens der Umhüllung (4) das Volumen ist, das zwischen dem Kopf (410) des Kompensationskolbens (41) an irgendeinem Punkt des Zyklus und dem Kopf (410) des Kompensationskolbens (41) an seinem oberen Totpunkt (PMH) ist.

6. Pumpe nach Anspruch 5, dadurch gekennzeichnet, daß die Bewegung des Kompensationskolbens (41) durch einen Nocken (42) gesteuert wird, der sich synchron mit der Bewegung des Rückstoßkolbens (10) dreht.

7. Zumeßpumpe nach Anspruch 1 oder 2, dadurch gekennzeichnet, daß sie wenigstens zwei Rückstoßkolben (10) aufweist, die jeweils in einem Zylinder (11) gleiten, wobei die Stopfeinrichtungen in der Lage sind, alle Zylinder (11) zu stopfen, wobei eine jede der Ausbringöffnungen (14) mit einer Rückschlagvorrichtung versehen ist, die zu einem Sammler führt, der mit einer Austrittsöffnung (17) versehen ist, und daß die Bewegung aller Rückstoßkolben (10) derart koordiniert wird, daß die durch die Austrittsöffnung (17) gehende Rate konstant ist.

8. Pumpe nach Anspruch 7, dadurch gekennzeichnet, daß die Bewegung aller Kolben durch einen Nocken gesteuert wird, dessen Weg oder dessen Wege derart gebildet sind, daß die Materialrate, die durch die Austrittsöffnung läuft, konstant ist für eine konstante Geschwindigkeit der Eintrittswelle.

9. Pumpe nach Anspruch 7, dadurch gekennzeichnet, daß die Bewegung aller Kolben durch einen einzigen zylindrisch doppeltwirkenden Nocken (50) gesteuert wird, dessen Drehachse parallel zur Achse der Kolben ist, und dessen Weg oder dessen Wege derart gebildet sind, daß die Materialrate, die durch die Austrittsöffnung läuft, für eine konstante Geschwindigkeit der Eingangswelle konstant ist.

10. Pumpe nach Anspruch 9, dadurch gekennzeichnet, daß die Bewegung eines jeden Rückstoßkolbens (10) von dem unteren Totpunkt (PMB) zu dem oberen Totpunkt (PMH) durch eine erste Rolle (51) in Eingriff mit einem ersten Rollweg (52) des Nockens (50) gesteuert wird, wobei die erste Rolle (51) an jeder Seite durch zwei Flansche (520) gehalten wird, und in der Achse des Kolbens (10) angeordnet ist, und daß die Rückbewegung vom oberen Totpunkt (PMH) zum unteren Totpunkt (PMB) durch eine zweite Rolle (53) in Eingriff in einem zweiten Rollweg (54) des Nockens (50) gesteuert wird, wobei die zweite Rolle (53) vorspringend bezüglich eines jeden Kolbens (10) angeordnet ist.

11. Pumpe nach einem der Ansprüche 1 bis 10, dadurch gekennzeichnet, daß die Rückschlagvorrichtung aus einer Kugel (15) gebildet wird, die mit einem Sitz (151) zusammenwirkt, der auf der Ausbringöffnung (14) auf der Außenseite des Zylinders (11) ausgebildet ist.

12. Pumpe nach Anspruch 11, dadurch gekennzeichnet, daß die Bewegung der Kugel (15) auf synchrone Weise bezüglich der Bewegung des (der) Rückstoßkolben(s) (11) gesteuert wird.

13. Verfahren zum Zumeßpumpen für pastöses Material mit Hilfe wenigstens eines Rückstoßkolbens, der in einem Zylinder zwischen einem oberen Totpunkt und einem unteren Totpunkt gleitet, wobei die Seitenwand des Zylinders Zutrittsöffnungen aufweist, die axial zwischen dem oberen Totpunkt und dem unteren Totpunkt angeordnet sind, wobei die Seitenwand, die den Zylinder auf der Seite des oberen Totpunkts bedeckt, eine Ausbringöffnung aufweist, die mit einer Rückschlagvorrichtung versehen ist, wobei der Pumpzyklus darin besteht, das Material in eine Zuführkammer einzuführen, die bis zu den Stopföffnungen reicht, um aus einem mechanisch zwangsgeführten Transfer, der von derselben Steuerung betätigt wird, wie der oder die Rückstoßkolben, den Zylinder durch das zu pumpende Material zu stopfen, wenn der Kolben die Zutrittsöffnungen freigibt, um den Kolben vorzubewegen zu einer Überdeckung der Zutrittsöffnungen, um die Rückschlagvorrichtung zu öffnen, um die Ausbringöffnung freizugeben, sobald der Kolben vollständig die Zutrittsöffnungen bedeckt hat, um das Vordringen des Kolbens bis zu einem oberen Totpunkt zu verfolgen, sodann die Ausbringöffnung durch die Rückschlagvorrichtung wieder zu verschließen, und um den Kolben zum unteren Totpunkt zurückzubringen, und sodann den Zyklus erneut auszuführen.

14. Verfahren nach Anspruch 13, dadurch gekennzeichnet, daß wenigstens zwei Kolben verwendet werden, deren Bewegungen derart gesteuert werden, daß die Summe der Raten, die durch die Ausbringöffnungen hindurchtreten, konstant ist.

15. Verfahren zum Herstellen von Luftreifen, bei dem der nicht vulkanisierte Kautschuk auf dem Vorformling durch ein Pumpverfahren nach einem der Ansprüche 13 oder 14 aufgebracht wird.

FIG. 1

FIG. 2

FIG. 3

FIG. 4

FIG. 5

FIG. 6

16

FIG. 7

FIG. 8